# EUROPEAN PATENT APPLICATION

(11) **EP 1 855 476 A2**
(43) Date of publication of application: **14.11.2007**
(21) Application number: 06024646.9
(22) Date of filing: 28.11.2006
(51) Int. Cl.: H04N 7/167

(54) **System and method for trusted data processing**

(30) Priority: 11.05.2006 US 431668
(71) Applicant: Broadcom Corporation, Irvine, CA 92617 (US)
(72) Inventor: Chen, Sherman Xuemin, 92129 San Diego CA (US)
(74) Representative: Jehle, Volker Armin

(57) **Abstract**

The present invention provides systems and methods for trusted data processing. The system for trusted data processing includes a memory having an encrypted data region and a clear data region and a central processing unit (CPU) including a nonvolatile memory, an asymmetric encryption engine, and a symmetric encryption engine. Encrypted data region includes a user-definable range of addresses. The system receives encrypted program instructions and an encrypted symmetric key. The encrypted program instructions are stored in the encrypted data region and the encrypted symmetric key is stored in the clear data region. The CPU decrypts the encrypted symmetric key using the asymmetric private key of the CPU. When the CPU accesses an address included in the range of addresses assigned to the encrypted data region, symmetric decryption processing, using the decrypted symmetric key, is invoked in the CPU. Methods for secure writing and retrieval of intermediate data are also provided.

## Description

### FIELD OF THE INVENTION

The present invention generally relates to a secure central processing unit for trusted data processing and specifically to a secure central processing unit for processing encrypted instructions and data.

### BACKGROUND OF THE INVENTION

End-users are increasingly downloading content and/or application programs via data networks directly to computers in their homes or offices. One popular mechanism used to receive content and programs is the television set-top box. These television set-top boxes act as home entertainment centers offering audio and video content, computer games, software upgrades, and other applications. Because of the value of the content and software offered, set-top boxes have become lucrative targets for hackers.

In response to early hacker threats, providers began encrypting content and software during transmission from the content/application server to the set-top box. However, these techniques only secured the data path between the server and set-top box. After receipt, the content and software is stored in the clear in a memory external to the set-top box central processing unit (CPU). Content and/or software stored in the clear in an accessible memory is highly vulnerable to sophisticated hackers. Once access to content or underlying code is obtained, malicious hackers can bypass access control mechanisms, receive channels and/or content without paying required fees, and possibly develop worms, viruses, or other malicious code to disrupt service to legitimate subscribers.

What is therefore needed are systems and methods for securing content and software stored in an end-user device.

What is further needed is a secure CPU architecture for efficiently processing encrypted software programs for various applications.
According to an aspect of the invention, a method is provided for trusted processing in a processor having an asymmetric public and private key pair, comprising:
retrieving an encrypted symmetric key from a clear data region of a memory;
decrypting the encrypted symmetric key using an asymmetric decryption algorithm, wherein the asymmetric decryption algorithm uses the asymmetric private key of the processor as a decryption key;
retrieving an encrypted instruction from an encrypted data region of the memory; and
decrypting the encrypted instruction using a symmetric decryption algorithm, wherein the symmetric decryption algorithm uses the decrypted symmetric key as a decryption key.
Advantageously, the method further comprises:
storing the asymmetric private key of the processor in a second memory, wherein the second memory is inside the processor.
Advantageously, the method further comprises:
storing the decrypted symmetric key in a second memory, wherein the second memory is inside the processor.
Advantageously, the method further comprises:
storing the asymmetric private key of the processor in a one time programmable memory.
Advantageously, the method further comprises:
receiving updates to the asymmetric decryption algorithm over a communications interface; and
storing the updated asymmetric decryption algorithm in a second memory, wherein the second memory is inside the processor.
Advantageously, the method further comprises:
receiving updates to the symmetric decryption algorithm over a communications interface; and
storing the updated symmetric decryption algorithm in a second memory, wherein the second memory is inside the processor.
Advantageously, the method further comprises:
generating intermediate data during processing of the decrypted instruction;
encrypting the intermediate data; and
storing the encrypted intermediate data in the first memory.
Advantageously, the method further comprises:
generating a random number.
Advantageously, the step of encrypting the intermediate data comprises:
XORing the intermediate data with the generated random number.
Advantageously, the step of encrypting the intermediate data comprises:
encrypting the intermediate data using a symmetric encryption algorithm, wherein the symmetric encryption algorithm uses the decrypted symmetric key as a encryption key.
Advantageously, the method further comprises:
retrieving intermediate data during processing of the decrypted instruction; and
decrypting the intermediate data.
Advantageously, the method further comprises:
generating a random number.
Advantageously, the step of decrypting the intermediate data comprises:
XORing the encrypting intermediate data with the generated random number.
Advantageously, the step of decrypting the intermediate data comprises:
decrypting the intermediate data using the symmetric decryption algorithm, wherein the symmetric decryption algorithm uses the decrypted symmetric key as a decryption key.
According to an aspect of the invention, a system is provided for trusted data processing, comprising:
a first memory, wherein the first memory includes an encrypted data region and a clear data region; and
a central processing unit, wherein the central processing unit includes:
   a nonvolatile memory, wherein the nonvolatile memory includes an asymmetric public and private key pair of the central processing unit and a decrypted symmetric key,
   an asymmetric encryption engine, wherein the asymmetric encryption engine is configured to decrypt an encrypted symmetric key retrieved from the first memory using the private key of the central processing unit as the decryption key, and
   a symmetric encryption engine, wherein the symmetric encryption engine is configured to decrypt an encrypted instruction retrieved from an address in the encrypted data region of the first memory using the decrypted symmetric key.
Advantageously, the encrypted data region includes a user-definable range of addresses.
Advantageously, the central processing unit further comprises:
a random number generator.
Advantageously, the nonvolatile memory is a one-time programmable memory.
Advantageously, the asymmetric encryption engine is implemented in hardware.
Advantageously, the asymmetric encryption engine is implemented in software.
Advantageously, the symmetric encryption engine is implemented in hardware.
Advantageously, the symmetric encryption engine is implemented in software.
Advantageously, the system further comprises:
a digital signature engine, wherein the digital signature engine is configured to verify a digital signature appended to a message from a server using an asymmetric public key of the server.
According to an aspect of the invention, a method is provided for trusted processing in a processor having an asymmetric public and private key pair, comprising:
receiving an encrypted program and an encrypted symmetric key from a server, wherein the encrypted program was encrypted using the symmetric key and the symmetric key was encrypted using the asymmetric private key of the processor;
storing the encrypted program in an encrypted data region of a memory;
storing the encrypted symmetric key in a clear data region of the memory;
decrypting the encrypted symmetric key using the private key of the processor; and
invoking symmetric decryption in the processor using the decrypted symmetric key when an address in the encrypted data region of the memory is accessed.
Advantageously, the method further comprises:
receiving a digital signature in a message including the encrypted program; and
verifying the digital signature using the public key of the server.

### BRIEF DESCRIPTION OF THE DRAWINGS

The accompanying drawings, which are incorporated herein and form a part of the specification, illustrate the present invention and, together with the description, further serve to explain the principles of the invention and to enable a person skilled in the pertinent art to make and use the invention.
FIG. 1 is a block diagram of an exemplary processing system.
FIG. 2 depicts the flow of data during an exemplary fetch cycle.
FIG. 3 depicts the flow of data in an exemplary indirect cycle.
FIG. 4 depicts the flow of data in an exemplary interrupt cycle.
FIG. 5 depicts a block diagram of an exemplary secure system for trusted data processing, according to embodiments of the present invention.
FIG. 6 depicts an exemplary operating environment for secure system 500, according to embodiments of the present invention.
FIG. 7 depicts a flowchart of a method for trusted data processing, according to embodiments of the present invention.
FIG. 8 depicts a flowchart of an exemplary method of retrieving a secure instruction from memory, according to embodiments of the present invention.
FIGs. 9A and 9B depict flowcharts of exemplary methods for writing intermediate data to memory and retrieving intermediate data from memory, respectively.
FIG. 10 depicts a flowchart of an exemplary method of interrupt processing, according to embodiments of the present invention.
FIG. 11 depicts the flow of data during an exemplary fetch cycle, according to embodiments of the invention.
FIG. 12 depicts the flow of data during an indirect cycle, according to embodiments of the present invention.
FIG. 13 depicts the flow of data during an exemplary interrupt cycle, according to embodiments of the present invention.

The present invention will now be described with reference to the accompanying drawings. In the drawings, like reference numbers can indicate identical or functionally similar elements. Additionally, the left-most digit(s) of a reference number may identify the drawing in which the reference number first appears.

### DETAILED DESCRIPTION OF THE INVENTION

### 1. Overview

### 1.1 CPU Architecture

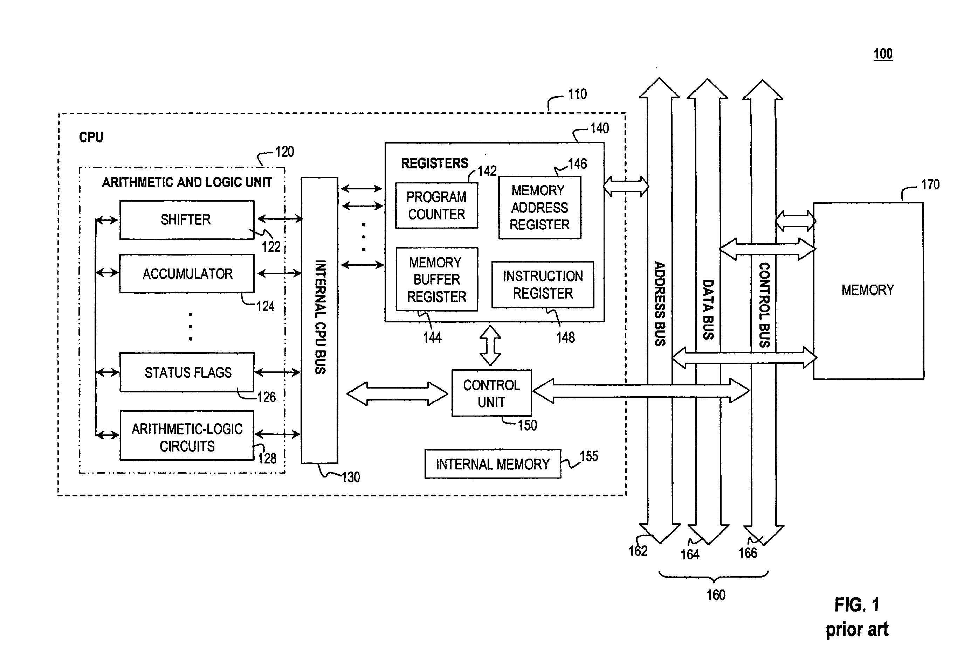

FIG. 1 is a block diagram of an exemplary processing system 100. System 100 includes a central processing unit (CPU) 110, memory 170, and bus structure 160. Memory 170 may be located on the same chip as CPU 110 or may be external to the chip containing CPU 110.

At a high level, a typical CPU such as CPU 110 performs the following tasks: reading instructions from memory (fetch instructions); decoding instructions to determine what action is required (interpret instructions); reading data from memory or an I/O module during execution of an instruction (fetch data); performing certain arithmetic or logic operation on data (process data); and writing data to memory or an I/O module (write data). In order to perform these tasks, CPU 110 needs to temporarily store some data. In addition, CPU 110 must remember the location of the last instruction so that it knows where to retrieve the next instruction. CPU 110 also must store instructions and data temporarily while an instruction is being executed.

A simplified diagram of CPU 110 is depicted in FIG. 1. CPU 110 includes an arithmetic and logic unit (ALU) 120, an internal CPU bus 130, one or more registers 140, a control unit 150, and an internal CPU memory 155. Internal CPU bus 130 is used to transfer data between the one or more registers 140 and ALU 120, since ALU 120 operates only on data in internal CPU memory 155. ALU 120 may include, among other elements, shifter 122, accumulator 124, status flags 126, and arithmetic-logic circuits 128.

A variety of registers are used during operation of CPU 110. For example, program counter 142 contains the address of an instruction to be fetched. Typically, program counter 142 is updated by CPU 110 after each instruction fetch so that it always points to the next instruction to be executed. Instruction register 148 contains the instruction most recently fetched. A fetched instruction is loaded into instruction register 148, where the opcode and operand specifiers are analyzed. Memory address register 146 contains the address of a location in memory. Memory buffer register 144 contains a word of data to be written to memory or the word most recently read. In general, data are exchanged with memory 170 using memory address register 146 and memory buffer register 144. As would be appreciated by persons of skill in the art, register organization is determined based on the processor and thus, a processor may have different or additional registers.

CPU 110 communicates with memory 170 via bus structure 160. Bus structure 160 may include an address bus 162, a data bus 164, and a control bus 166.

Memory 170 stores instructions and data for programs being executed by CPU 110. Data is typically treated as data upon which computations were performed by CPU 110. Instructions are typically treated as data to be interpreted as codes for generating control signals.

### 1.2 Instruction Cycles

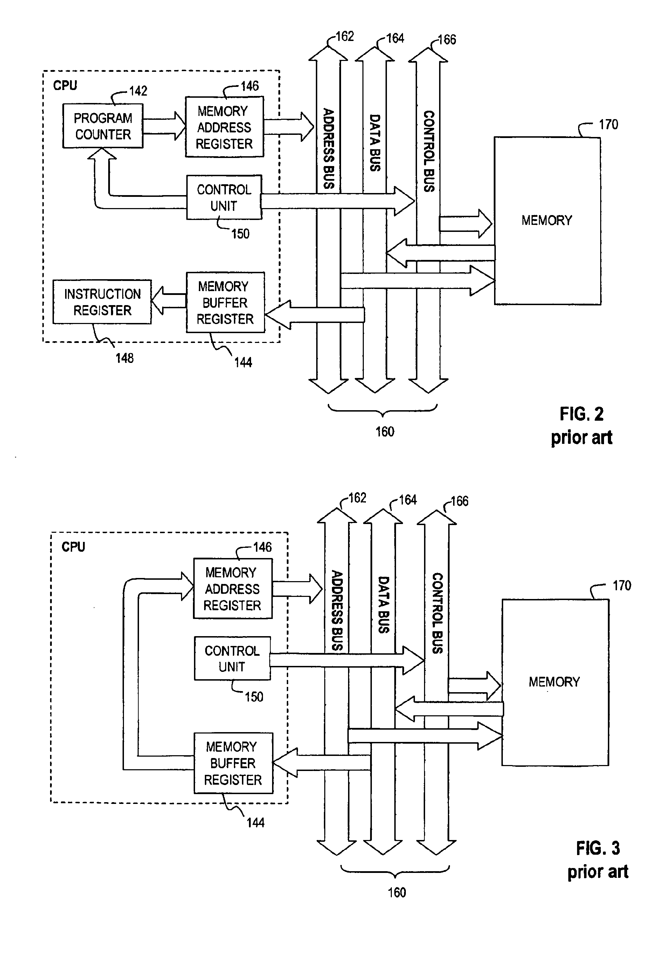

As would be appreciated by a person of skill in the art, the exact sequence of events during an instruction cycle depends on the design of the CPU. In the illustration of FIG. 2, exemplary CPU 110 employs a memory address register 146, a memory buffer register 144, a program counter 142, and an instruction register 148.

During a fetch cycle, an instruction is read from memory 170. FIG. 2 depicts the flow of data during an exemplary fetch cycle. Program counter 142 contains the address of the next instruction to be fetched. This address is moved to the memory address register 146 and placed on the address bus 162. Control unit requests a memory read. The result of the read is placed on data bus 164, copied to the memory buffer register 144, and then moved to instruction register 148. Meanwhile, program counter 142 is incremented by 1 in preparation for the next fetch.

After the fetch cycle is over, control unit 150 examines the content of instruction register 148 to determine if it contains an operand specifier using indirect addressing. If so, an indirect cycle is performed by the CPU. FIG. 3 depicts the flow of data in an exemplary indirect cycle.

During an indirect cycle, the rightmost N bits of the memory buffer register 144, containing the address reference, are transferred to memory address register 146. Control unit 150 then requests a memory read to get the desired address of the operand into memory buffer register 144.

The fetch and indirect cycles are simple and predictable. The instruction cycle takes many forms since the form depends on which of the various machine instructions is in the instruction register. This cycle may involve transferring data among registers, reading or writing from memory port I/O, and/or the invocation of ALU 120.

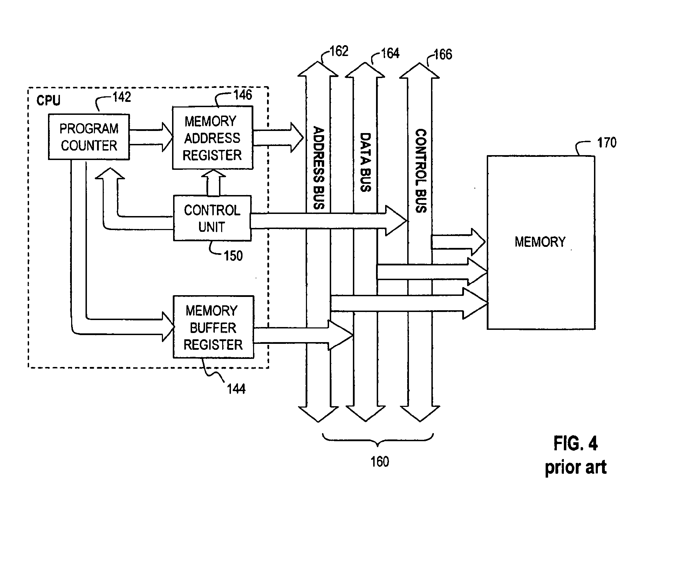

Like the fetch and indirect cycles, the interrupt cycle is simple and predictable. FIG. 4 depicts the flow of data in an exemplary interrupt cycle. In the interrupt cycle, the current contents of program counter 142 must be saved so that CPU 110 can resume normal activity after the interrupt. Thus, the contents of program counter 142 are transferred to memory buffer register 144 to be written into memory. The special memory location reserved for this purpose is loaded into memory address register 146 from control unit 150. For example, the memory location might be a stack pointer. Program counter 142 is loaded with the address of the interrupt routine. As a result, the next cycle will begin by fetching the appropriate instruction.

### 2. Architecture for Trusted Data Processing

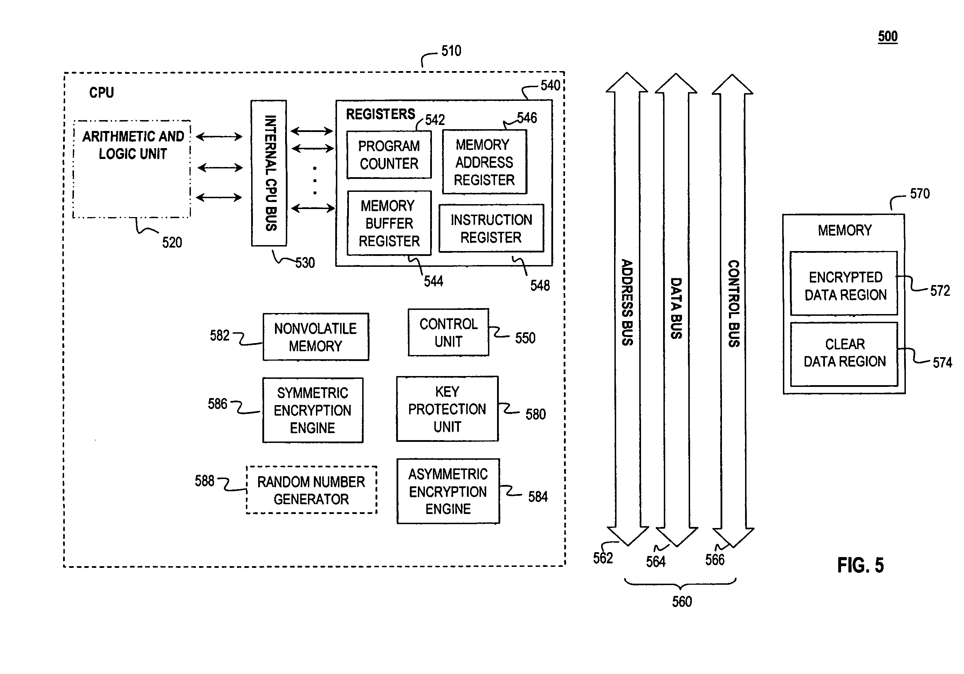

FIG. 5 depicts a block diagram of an exemplary secure system 500 for trusted data processing, according to embodiments of the present invention. The secure system of FIG. 5 provides useful trust and security capabilities in a CPU while remaining low in cost as compared with conventional cryptographic coprocessors. In addition, the architecture of FIG. 5 provides a mechanism to protect the software environment in a platform by processing encrypted software programs for various applications.

System 500 includes a CPU 510, memory 570, and bus structure 560. Bus structure 560 includes an address bus 562, a data bus 564, and a control bus 566. Bus structure 560 is used to transfer instructions and/or data between CPU 510 and memory 570. As would be appreciated by persons of skill in the art, other architectures for transfer of instructions and/or data between CPU 510 and memory 570 can be used with the present invention. Memory 570 may be located on the same chip as CPU 510 or may be external to the chip containing CPU 510.

Memory 570 includes an encrypted data region 572 and a clear data region 574. Encrypted data region 572 is a range of memory addresses which cause decryption processing to be invoked when CPU 510 accesses an address in the range. In an embodiment, encrypted data region 572 stores instructions of one or more programs, encrypted using a symmetric key algorithm. Clear data region 574 is a range of memory address which do not invoke decryption processing when accessed by CPU 510. In an embodiment, the symmetric key associated with program instructions stored in encrypted data region 572, which is encrypted with the public key of CPU 510, is stored in clear data region 574. In an embodiment, after the encrypted symmetric key is decrypted and stored in nonvolatile memory 582, the encrypted symmetric key is erased from memory 570. If multiple programs are stored in encrypted data region 572, clear data region 574 may store multiple encrypted symmetric keys, one per program.

A simplified diagram of CPU 510 is depicted in FIG. 5. CPU 510 includes an ALU 520, an internal CPU bus 530, one or more registers 540, and a control unit 550. ALU 520, internal CPU bus 530, and registers 540 were discussed above in reference to FIG. 1.

CPU 510 also includes a key protection unit 580, a nonvolatile memory 582, an asymmetric encryption engine 584, a symmetric encryption engine 586, and an optional random number generator 588. Nonvolatile memory 582 stores the asymmetric public/private key pair for CPU 510, one or more decrypted symmetric keys, and optionally a random number generating by random number generator 588. Nonvolatile memory 582 may be a One-Time Programmable (OTP) memory array. As would be appreciated by persons of skill in the art, other architectures for nonvolatile memory 582 can be used with the present invention.

Each CPU 510 has an asymmetric key (public/private) key pair. In an embodiment, the asymmetric key pair is unique to the CPU. The asymmetric key pair for the CPU may be generated at the time of manufacture or may be injected into the CPU by a user or system integrator. The private key of the asymmetric key pair is the root identity for CPU 510. Therefore, it is critical that the private key be handled in a highly secure manner. In CPU 510, the private key can only be accessed by the key protection unit 580. In addition, the private key never leaves the security boundary of CPU 510. That is, private key 510 cannot be accessed by any user or component external to CPU 510. In contrast, the public key can be read out from the CPU by a user or an external component via control bus 566.

Asymmetric encryption engine 584 provides the asymmetric encryption and decryption processing required by CPU 510. For example, asymmetric encryption engine 584 uses the private key of CPU 510 as the decryption key to decrypt the encrypted symmetric key stored in clear data region 574. Asymmetric encryption engine 584 may use an RSA encryption algorithm. As would be appreciated by a person of skill in the art, other asymmetric encryption algorithms may be used in asymmetric encryption engine 584. In an embodiment, the asymmetric encryption algorithm used by asymmetric encryption engine 584 can be renewed (updated or downloaded) or replaced in the field.

The asymmetric public/private key pair has a form compatible with the encryption algorithm used by the asymmetric encryption engine. For example, when an RSA encryption algorithm is used, a 2048-bit RSA private key (or its equivalent form) may be the root secret key for CPU 510. Asymmetric encryption engine 584 may be included in key protection unit 580. Alternatively, asymmetric encryption engine 584 is separate from key protection unit 580.

Symmetric encryption engine 586 provides the symmetric encryption and decryption processing required by CPU 510. For example, symmetric encryption engine 586 uses the symmetric key decrypted by asymmetric encryption engine 584 as the decryption key to decrypt instructions/data stored in encrypted data region 572. As would be appreciated by a person of skill in the art, any suitable symmetric encryption algorithm including, but not limited to, DES, 3DES, or the Advanced Encryption Standard (AES) can be used with the present invention. In an embodiment, the symmetric encryption algorithm used by symmetric encryption engine 586 can be renewed (updated or downloaded) or replaced in the field.

CPU 510 may also include a random number generator 588. Random number generator 588 includes functionality to generate a random number for use in encryption processing. In an embodiment, random number generator 588 generates a random number at power-up. The generated random number is stored in nonvolatile memory 582 until CPU 510 powers-down. At power-down, the stored random number is erased. A new random number is then generated when CPU 510 powers-on again. As would be appreciated by persons of skill in the art, other techniques for generating random numbers for use in encryption can be used with the present invention.

CPU 510 includes a memory range checker which stores the memory boundary addresses for the encrypted data region 572 and clear data region 574. In an embodiment, the memory range checker is included in key protection unit 580. A user of system 500 configures trusted data processing by setting the memory ranges for each region. For example, to disable encryption/decryption, the user allocates no memory addresses to encrypted data region 572.

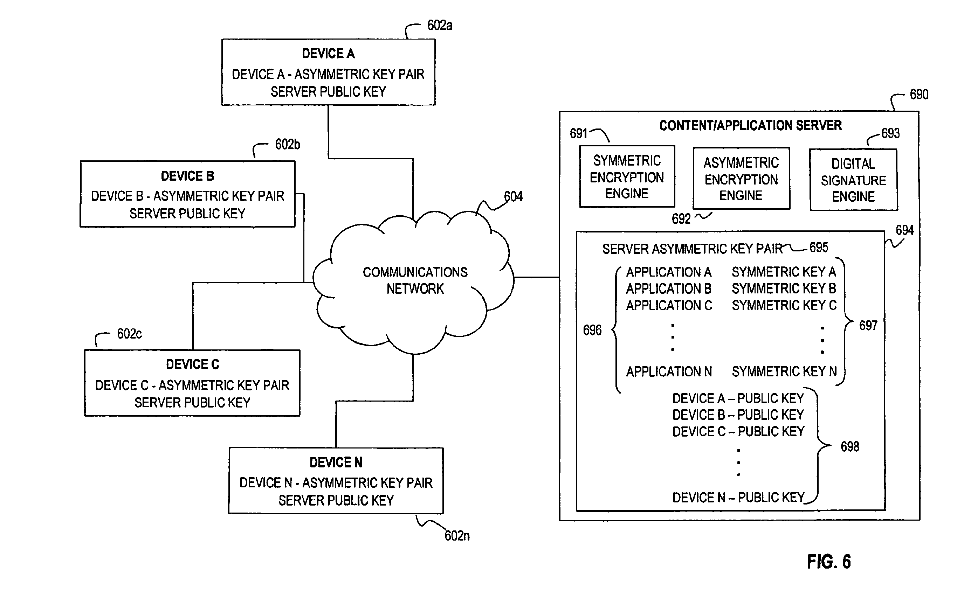

FIG. 6 depicts an exemplary operating environment 600 for secure system 500, according to embodiments of the present invention. Operating environment includes one or more devices 602a-n, communications network 604, and content/application server 606. In an embodiment, devices 602a-n are set-top boxes and server 690 is a head-end device.

Devices 602a-n and server 690 exchange messages via communications network 604. Communications network 604 is any network capable of carrying data traffic. Communications network 604 may be a public data network such as the Internet, a private data network, the public switched telephone network (PSTN), a wireless communications network, a cable network, or similar network.

Server 690 stores content and applications used by devices 602 and includes functionality to communicate securely with devices 602. Server 690 includes memory 694, symmetric encryption engine 691, asymmetric encryption engine 692, and optional digital signature engine 693. Memory 694 stores the asymmetric (public/private) key pair 695 for server 690, one or more secure application programs 696a-n, and the public keys 698a-n for devices served by application server 690. Each secure application program 696a-n is associated with a single symmetric encryption key 697a-n. In an embodiment, a portion of the secure programs 696 are encrypted using their associated symmetric key 697 and stored in memory in encrypted form. Alternatively, server 690 encrypts a secure application program with its associated symmetric key when transmitting the program to a user device 602.

A device 602 requests a secure application program 696 from the server 690 when needed. A single secure program 696 may be accessed by multiple devices 602. When a device 602 requests a secure program, server 690 encrypts the symmetric key associated with the secure program with the public key of the device which requested the secure program. For example, if device 602a requests program 692A, server 690 encrypts symmetric key 694A with the public key for device 602a. The encrypted symmetric key is transmitted with the encrypted secure program to the requesting device.

Asymmetric encryption engine 691 provides the asymmetric encryption and decryption processing required by server 690. For example, asymmetric encryption engine 691 encrypts the symmetric key of an application program requested by a device using the public key 698 of the device as the encryption key. Asymmetric encryption engine 584 may use an RSA encryption algorithm. As would be appreciated by a person of skill in the art, other asymmetric encryption algorithms may be used in asymmetric encryption engine 584. The asymmetric encryption algorithm used by asymmetric encryption engine 691 is the same or complimentary to the algorithm used by asymmetric encryption engine 584 of CPU 510.

Symmetric encryption engine 692 provides the symmetric encryption and decryption processing required by server 690. For example, symmetric encryption engine 692 encrypts a secure application program using its associated symmetric key as the encryption key. As would be appreciated by a person of skill in the art, any suitable symmetric encryption algorithm including, but not limited to, DES, 3DES, or the Advanced Encryption Standard (AES) can be used with the present invention. The symmetric encryption algorithm used by symmetric encryption engine 692 is the same or complimentary to the algorithm used by symmetric encryption engine 586 of CPU 510.

Digital signature engine 698 includes functionality to digital sign messages to be sent to devices 602. Digital signature engine 698 digitally signs messages sent to devices 602 using the private key of server 690. In an embodiment, digital signature engine 698 hashes and signs the encrypted message. As would be appreciated by a person of skill in the art, any suitable hash/signature algorithm such as keyed-has message authentication code (HMAC), message authentication code (MAC), secure hash algorithm (SHA), or cipher block chaining message authentication code protocol (CCMP), can be used with the present invention.

Device 602 includes system 500, described above in reference to FIG. 5. Device 602 may also include a digital signature engine for verifying a signature received from server 690 or another entity. As shown in FIG. 6 and described above, each device stores the asymmetric key pair for its CPU 510 and optionally stores the public key of server 690. The public key of server 690 is typically used to verify a digital signature appended to a message from server 690.

### 3. Methods for Trusted Data Processing

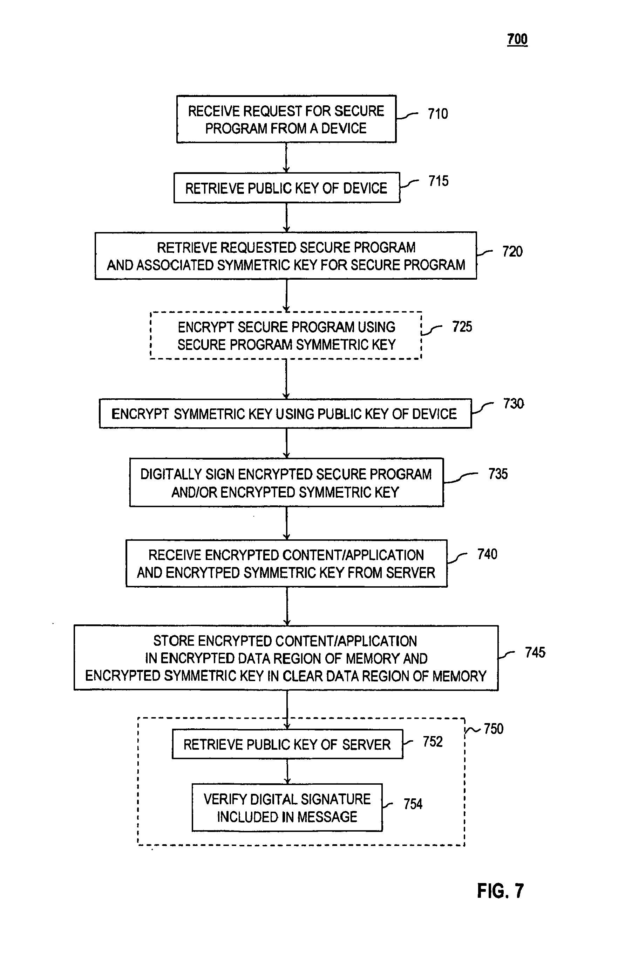

FIG. 7 depicts a flowchart 700 of a method for trusted data processing, according to embodiments of the present invention. Flowchart 700 is described with continued reference to the system and environment depicted in FIGs. 5 and 6. However, flowchart 700 is not limited to those embodiments. Note that some of the steps in flowchart 700 do not necessarily have to occur in the order depicted.

In step 710, server 690 receives a request for a secure program from a device 602.

In step 715, server 690 retrieves the public key 698 for the device 602 which requested the secure program. In an embodiment, the public key 698 for the device 602 is stored in server 690. Alternatively, the public key 698 is requested from device 602.

In step 720, the requested secure program 696 and associated symmetric key 697 are retrieved. Note that secure program 696 may have been encrypted using its associated symmetric key 697 and stored in memory 692 in encrypted form prior to step 720. In this case, the retrieved requested secure program 696 is encrypted.

In step 725, the requested secure program 696 is encrypted by symmetric encryption engine 691 using the symmetric key 697 associated with the requested secure program 696. This step is optional. If the secure program is stored in encrypted form in memory 692, step 725 is not required.

In step 730, the symmetric key 697 associated with the requested secure program 696 is encrypted by asymmetric encryption engine 692 using the public key 698 of the requesting device 602. The encrypted symmetric key may be included in the header of the message containing the encrypted requested secure program. Alternatively, the encrypted symmetric key may sent in a message separate from the message containing the encrypted requested secure program.

In step 735, the encrypted secure program and/or encrypted symmetric key is digitally signed by digital signature engine 693. Step 735 is optional. When present, the digital signature enables the device 602 receiving the message to verify the identity of the message originator and validate the authenticity of the message content. In an embodiment, to generate the digital signature, a message digest is first generated by hashing the document data (e.g., encrypted secure program). The message digest is then encrypted using the private key of application server 690. The encrypted message digest is the signature which is then appended to the message. As would be appreciated by a person of skill in the art, digital signature engine 693 may use any digital signature algorithm to generate the signature. Exemplary digital signature algorithms include SHA, Digital Signature Algorithm (DSA), or ElGamal signature.

In step 740, the encrypted secure program and encrypted symmetric key are received by device 602.

In step 745, the encrypted secure program is written to the encrypted data region 572 of memory 570 and the encrypted symmetric key is written to the clear data region 574 of memory 570.

In step 750, the digital signature appended to the message is verified. Step 750 is optional and is only present when a digital signature is received. Note that step 750 may be performed prior to step 745. Step 750 includes steps 752 and 754.

In step 752, the public key of application server 690 is retrieved. In an embodiment, device 602 stores the public key of application server 690 locally. Alternatively, device 602 retrieves the public key of application server 690 from application server 690 or another secure public data store.

In step 754, the appended signature is verified. As discussed above, the digital signature engine in both application server 690 and device 602 use the same or complementary digital signature algorithms. For example, to verify the digital signature, device 602 decrypts the signed message digest using the public key of application server 690 to obtain a first message digest. Device 602 then hashes the message to generate a second message digest. If the second message digest matches the first message digest, device 602 has reasonable assurance that the message originated from application server 690 and has not been modified.

Upon completion of flowchart 700, the instructions and/or data of secure program 696 are available for execution by CPU 510.

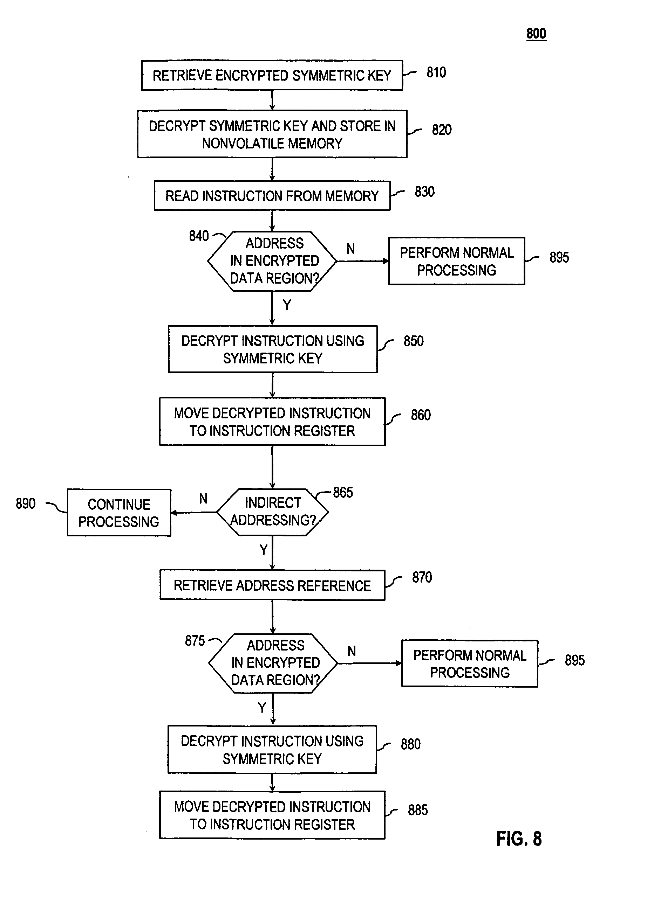

FIG. 8 depicts a flowchart 800 of an exemplary method of retrieving a secure instruction from memory, according to embodiments of the present invention. The exact sequence of events prior to and subsequent to the retrieval operation of flowchart 800 are dependent upon the design of the CPU. The method of flowchart 800 can be used with any CPU architecture including, but not limited to, sequential processing, parallel processing, and instruction pipelining architectures. Flowchart 800 is described with continued reference to the system depicted in FIG. 5. However, flowchart 800 is not limited to that embodiment. Note that some of the steps in flowchart 800 do not necessarily have to occur in the order depicted.

In step 810, the encrypted symmetric key associated with the encrypted instruction is retrieved from memory 570.

In step 820, the encrypted symmetric key is decrypted by the asymmetric encryption engine 584 using the private key of CPU 510 as the decryption key. The decrypted symmetric key is stored in nonvolatile memory 582.

Step 810 and 820 may be performed when execution of an encrypted secure program is started. In an embodiment, steps 810 and 820 are performed only once during execution of the secure program. Steps 830 through 880, which describe the process of retrieving and processing an encrypted instruction, are repeated for each instruction and/or encrypted data retrieved during the execution of the secure program.

In step 830, an instruction is read from memory 570.

In step 840, a determination is made whether the address of the instruction is in the encrypted data region 572 of memory 570. For example, in step 840, CPU 510 accesses the memory boundary addresses for encrypted data region 572 and/or clear data region 574. If the address is within the encrypted data region 572, operation proceeds to step 850 and decryption processing is performed. If the address is not within the encrypted data region 572, operation proceeds to step 895 and decryption processing is bypassed.

In step 850, the received encrypted instruction is decrypted by symmetric encryption engine 586 using the stored symmetric key as the decryption key.

In step 860, the decrypted instruction is moved to the appropriate register or storage location for decoding and execution by CPU 510.

In step 865, a determination is made whether the decrypted instruction includes an operand specifier using indirect addressing. If an operand specifier using indirect addressing is included, operation proceeds to step 860. If an operand specifier using indirect addressing is not included, operation proceeds to step 890.

In step 870, the address reference is retrieved and the instruction or data at that address is retrieved from memory 570.

In step 875, a determination is made whether the address reference is in the encrypted data region 572 of memory 570. For example, in step 875, CPU accesses the memory boundary addresses of the encrypted data region 572 and/or clear data region 574. If the address reference is within the encrypted data region 572, operation proceeds to step 880 and decryption processing is performed. If the address reference is not within the encrypted data region 572, operation proceeds to step 895 and decryption processing is bypassed.

In step 880, the received encrypted instruction is decrypted by symmetric encryption engine 586 using the stored symmetric key as the decryption key.

In step 885, the decrypted instruction is moved to the appropriate register for execution by CPU 510.

In step 890, CPU 510 continues normal processing.

In step 895, CPU 510 performs normal processing.

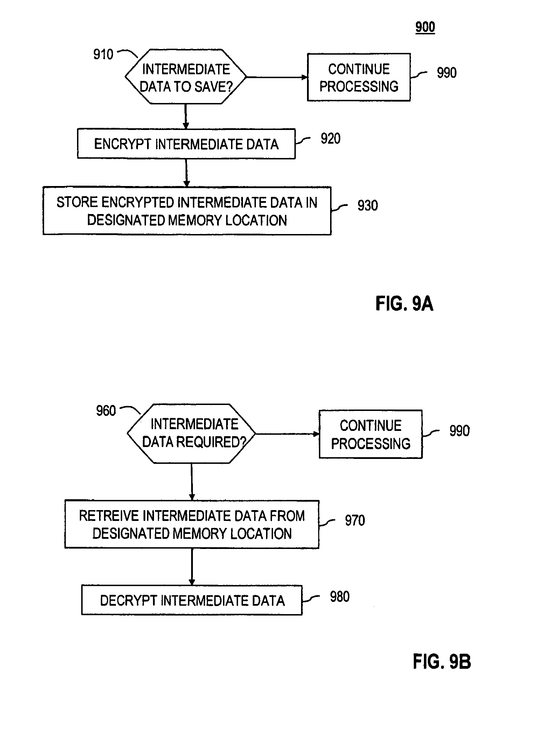

During execution of an instruction, a CPU may generate data to be written to memory for use during execution of a future instruction. This data is referred to herein as "intermediate data." In addition, the CPU may require the retrieval of stored intermediate data during execution of an instruction. FIGs. 9A and 9B depict flowcharts 900, 950 of exemplary methods for writing intermediate data to memory and retrieving intermediate data from memory, respectively. The exact sequence of events prior to and subsequent to the operations of flowcharts 900 and 950 are dependent upon the design of the CPU. The methods of flowcharts 900 and 950 can be used with any CPU architecture including, but not limited to, sequential processing, parallel processing, and instruction pipelining architectures. Flowcharts 900 and 950 are described with continued reference to the system depicted in FIG. 5. However, flowcharts 900 and 950 are not limited to that embodiment. Note that some of the steps in flowcharts 900 and 950 do not necessarily have to occur in the order depicted.

FIG. 9A begins in step 910 when a determination is made whether intermediate data is to be written into memory 570. If intermediate data is to be written to memory 570, operation proceeds to step 920. If no intermediate data is to be written to memory 570, operation proceeds to step 990 and CPU 510 continues normal processing.

In step 920, CPU 510 encrypts intermediate data. In an embodiment, In an embodiment, CPU 510 XORs the generated intermediate data with a random number generated by random number generator 588 to encrypt the intermediate data. For example, the random number may be generated once per power cycle at power-on of CPU 510. The generated random number is then stored and used for all local XOR encryption while CPU 510 remains powered. At power-down, the random number is erased. Alternatively, CPU 510 encrypts intermediate data 510 using symmetric encryption engine 586 with the stored symmetric key as the encryption key. As would be appreciated by persons of skill in the art, other techniques for encrypting intermediate data can be used with the present invention.

In step 930, the encrypted intermediate data is stored in a designated location in memory 570.

FIG. 9B begins in step 950 when a determination is made whether intermediate data is to be retrieved from memory 570. If intermediate data is to be retrieved from memory 570, operation proceeds to step 960. If no intermediate data is to be retrieved from memory 570, operation proceeds to step 990 and CPU 510 continues normal processing.

In step 960, the encrypted intermediate data is retrieved from the designated location in memory 570.

In step 970, CPU 510 decrypts the intermediate data. In an embodiment, CPU 510 XORs the encrypted intermediate data with the random number generated by random number generator 588 to retrieve the original intermediate data. Alternatively, CPU 510 decrypts intermediate data 510 using symmetric encryption engine 586 with the stored symmetric key as the decryption key. As would be appreciated by persons of skill in the art, other techniques for decrypting the intermediate data can be used with the present invention.

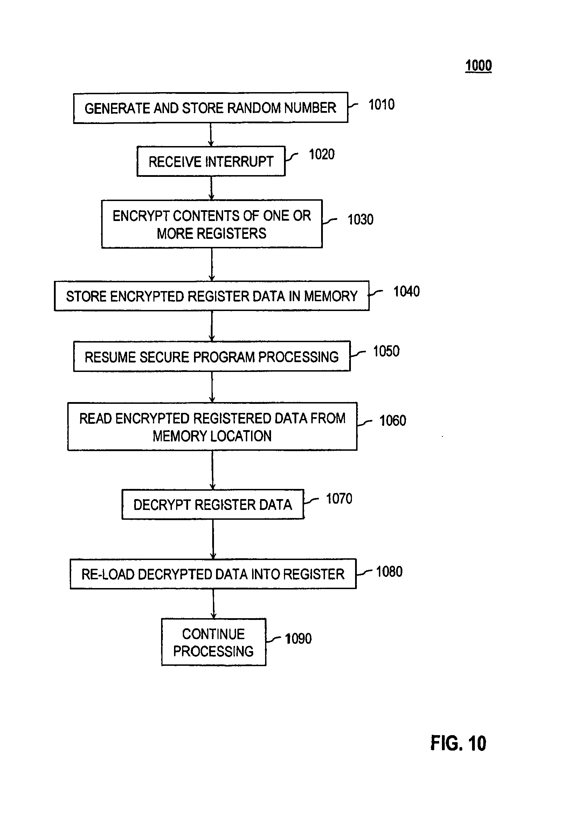

FIG. 10 depicts a flowchart 1000 of an exemplary method of interrupt processing, according to embodiments of the present invention. The exact sequence of events prior to and subsequent to the interrupt operation of flowchart 1000 are dependent upon the design of the CPU. The method of flowchart 1000 can be used with any CPU architecture including, but not limited to, sequential processing, parallel processing, and instruction pipelining architectures. Flowchart 1000 is described with continued reference to the system depicted in FIG. 5. However, flowchart 1000 is not limited to that embodiment. Note that some of the steps in flowchart 1000 do not necessarily have to occur in the order depicted.

Prior to step 1010, a random number may be generated by random number generator 588. In an embodiment, the random number is generated once per power cycle at power-on of CPU 510. The generated random number is then stored and used for all local XOR encryption while CPU 510 remains powered. At power-down, the random number is erased.

In step 1020, CPU 510 receives an interrupt signal or request. When an interrupt is received, CPU 510 must save the state of the currently executing secure program. This involves storing the contents of one or more registers 540.

In step 1030, CPU 510 encrypts the contents of one or more registers. For example, CPU 510 may encrypt the address of the next instruction to be fetched. In an embodiment, CPU 510 XORs the register data with the generated random number to encrypt the data. Alternatively, CPU 510 encrypts intermediate data 510 using symmetric encryption engine 586 with the stored symmetric key as the encryption key. As would be appreciated by persons of skill in the art, other mechanisms for encrypting the register data can be used with the present invention.

In step 1040, the encrypted register data is stored in a location in memory 570 reserved for this purpose.

In step 1050, processing of the secure program instructions is resumed.

In step 1060, CPU 510 reads the encrypted register data from the reserved memory location.

In step 1070, the encrypted register data is decrypted. In an embodiment, CPU 510 XORs the encrypted register data with the random number generated by random number generator 588 to retrieve the original register data. Alternatively, CPU 510 decrypts register data 510 using symmetric encryption engine 586 with the stored symmetric key as the decryption key. As would be appreciated by persons of skill in the art, other techniques for decrypting the register data can be used with the present invention.

In step 1080, the decrypted data is re-loaded into the appropriate registers to restore the state of the executing secure program.

In step 1090, processing of the secure program instructions continues.

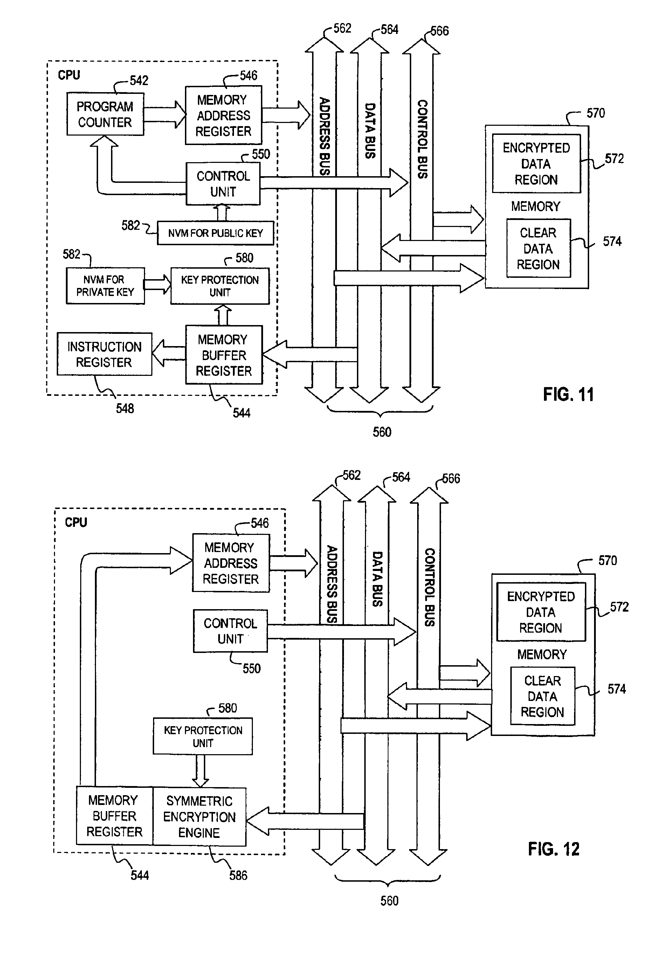

FIG. 11 depicts the flow of data during an exemplary fetch cycle, according to embodiments of the invention. During the fetch cycle, an encrypted instruction is read from encrypted data region 572 of memory 570. The encrypted instruction is decrypted by symmetric encryption engine 586 using the symmetric key for the program as the decryption key.

Program counter 542 contains the address of the next instruction to be fetched. This address is moved to the memory address register 546 and placed on address bus 562. Control unit 550 request a memory read and the result is placed on data bus 564. The instruction is decrypted by symmetric encryption engine 586, copied into memory buffer register 544, and moved to instruction register 548. Meanwhile, program counter 542 is incremented by 1, preparing for the next fetch.

Once the fetch cycle is over, control unit 550 examines the contents of instruction register 548 to determine whether it contains an operand specifier using indirect addressing. If so, an indirect cycle is performed. FIG. 12 depicts the flow of data during an indirect cycle, according to embodiments of the present invention. The rightmost N bits of memory buffer register 544, which contain the address reference, are transferred to memory address register 546. Then control unit 550 request a memory read and the result is placed on data bus 564. The result is decrypted by symmetric encryption engine 586 to get the address of the operand into memory buffer register 544.

The instruction cycle takes may forms since the form depends on which of the various machine instructions is in instruction register 548. This cycle may involve transferring data among registers, reading and decrypting or encrypting and writing from memory port I/O, and/or the invocation of ALU.

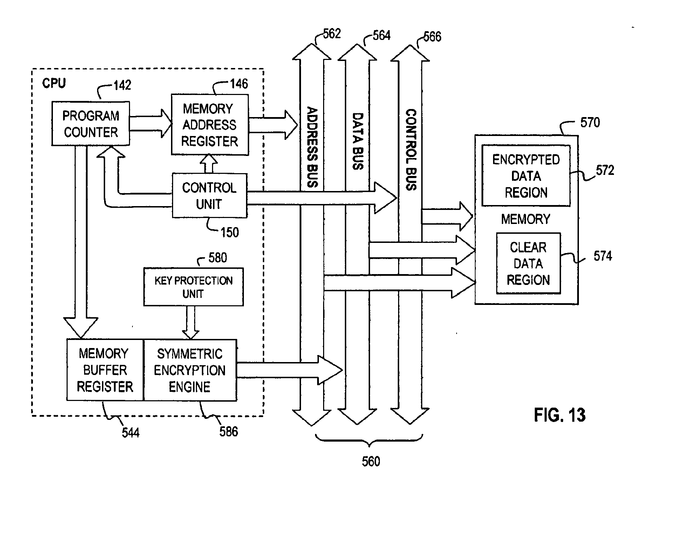

FIG. 13 depicts the flow of data during an exemplary interrupt cycle, according to embodiments of the present invention. During the interrupt cycle, the contents of program counter 542 must be saved so that CPU 510 can resume normal activity after the interrupt. Thus, contents of program counter 542 are transferred to memory buffer register 544 to be encrypted and written into memory. The special memory location reserved for this purpose is loaded into memory address register 546 from control unit 550. It might, for example, be a stack pointer. Program counter 542 is loaded with the address of the interrupt routine. As a result, the next cycle will begin by fetching the appropriate instruction.

### 4. Conclusion

While various embodiments of the present invention have been described above, it should be understood that they have been presented by way of example only, and not limitation. It will be apparent to persons skilled in the relevant art that various changes in form and detail can be made therein without departing from the spirit and scope of the invention. Thus, the breadth and scope of the present invention should not be limited by any of the above-described exemplary embodiments, but should be defined only in accordance with the following claims and their equivalents.

## Claims

1. A method for trusted processing in a processor having an asymmetric public and private key pair, comprising:
retrieving an encrypted symmetric key from a clear data region of a memory;
decrypting the encrypted symmetric key using an asymmetric decryption algorithm, wherein the asymmetric decryption algorithm uses the asymmetric private key of the processor as a decryption key;
retrieving an encrypted instruction from an encrypted data region of the memory; and
decrypting the encrypted instruction using a symmetric decryption algorithm, wherein the symmetric decryption algorithm uses the decrypted symmetric key as a decryption key.

2. The method of claim 1, further comprising:
storing the asymmetric private key of the processor in a second memory, wherein the second memory is inside the processor.

3. The method of claim 1, further comprising:
storing the decrypted symmetric key in a second memory, wherein the second memory is inside the processor.

4. The method of claim 1, further comprising:
storing the asymmetric private key of the processor in a one time programmable memory.

5. The method of claim 1, further comprising:
receiving updates to the asymmetric decryption algorithm over a communications interface; and
storing the updated asymmetric decryption algorithm in a second memory, wherein the second memory is inside the processor.

6. A system for trusted data processing, comprising:
a first memory, wherein the first memory includes an encrypted data region and a clear data region; and
a central processing unit, wherein the central processing unit includes:
a nonvolatile memory, wherein the nonvolatile memory includes an asymmetric public and private key pair of the central processing unit and a decrypted symmetric key,
an asymmetric encryption engine, wherein the asymmetric encryption engine is configured to decrypt an encrypted symmetric key retrieved from the first memory using the private key of the central processing unit as the decryption key, and
a symmetric encryption engine, wherein the symmetric encryption engine is configured to decrypt an encrypted instruction retrieved from an address in the encrypted data region of the first memory using the decrypted symmetric key.

7. The system of claim 6, wherein the encrypted data region includes a user-definable range of addresses.

8. The system of claim 6, wherein the central processing unit further comprises:
a random number generator.

9. The system of claim 6, wherein the nonvolatile memory is a one-time programmable memory.

10. A method for trusted processing in a processor having an asymmetric public and private key pair, comprising:
receiving an encrypted program and an encrypted symmetric key from a server, wherein the encrypted program was encrypted using the symmetric key and the symmetric key was encrypted using the asymmetric private key of the processor;
storing the encrypted program in an encrypted data region of a memory;
storing the encrypted symmetric key in a clear data region of the memory;
decrypting the encrypted symmetric key using the private key of the processor; and
invoking symmetric decryption in the processor using the decrypted symmetric key when an address in the encrypted data region of the memory is accessed.
